# EUROPEAN PATENT SPECIFICATION

(11) **EP 4 116 385 B1**
(45) Date of publication and mention of the grant of the patent: **25.06.2025**
(21) Application number: 21764745.2
(22) Date of filing: 02.03.2021
(51) Int. Cl.: C09D 163/00, C09D 5/00

(54) **AQUEOUS DUAL-COMPONENT WOODWARE SEALING PRIMER**
WÄSSRIGE ZWEIKOMPONENTIGE GRUNDIERUNG ZUR VERSIEGELUNG VON HOLZWAREN
APPRÊT AQUEUX BI-COMPOSANT POUR L'ÉTANCHÉITÉ DES BOISERIES

(30) Priority: 04.03.2020 CN 202010141502
(43) Date of publication of application: 11.01.2023
(73) Proprietor: Sherwin-Williams (Guangdong) New Material Co., Ltd., Foshan, Guangdong 528306 (CN)
(72) Inventor: CHEN, Hong, Foshan, Guangdong 528306 (CN); YANG, Wei, Foshan, Guangdong 528306 (CN)
(74) Representative: Novagraaf Group
(86) International application number: PCT/CN2021/078716
(87) International publication number: WO 2021/175217

(56) References cited:
- WO-A1-99/25768
- CN-A- 106 634 424
- CN-A- 107 858 078
- CN-A- 107 936 770
- CN-A- 110 256 938
- CN-A- 111 205 737
- CN-B- 106 833 268

## Description

### BACKROUND OF THE INVENTION

### TECHNICAL FIELD

The present application relates to a two-component waterborne wood sealing primer, and more particularly to a two-component waterborne wood sealing primer containing epoxy resin.

### BACKGROUND

Epoxy resin is widely used in the coating industry. It is well known that the epoxy resin-curing agent system (also known as two-component epoxy resin paint) after curing can obtain a coating with good adhesion, high mechanical strength, good chemical resistance and corrosion resistance. Therefore, epoxy resin paint is considered to be one of the most cost-effective coating compositions in practice.

In recent years, with the enhancement of people's awareness of environmental protection and the improvement of environmental regulations, waterborne coatings have received more and more attention. Among them, the two-component waterborne epoxy coating composition has the advantages of high performance and multi-function, and is one of the development directions of waterborne wood paint. The volatile organic compound (VOC) content thereof is low, and its performance is close to or equivalent to solvent-based wood paint. However, there are still some problems in the application of two-component waterborne epoxy wood paint. For example, when used as a sealing primer for wood, the sealing effect is not good, and the oil and color in the wood cannot be completely sealed, causing the coating to turn yellow; the filling and sealing effect is not enough, causing the coating to collapse, which cannot meet the existing woodware coating requirements.

CN 106 833 268 B discloses in one-component aqueous sealing primers for wooden substrates comprising epoxy resin and defoamer exhibiting a solid contents of more than 99%.

WO 99/25768 A1 discloses curing systems for epoxy resin coating compositions having a solid content of 50%.

### SUMMARY

The present application provides a two-component waterborne wood sealing primer, including:
Component A: a film-forming resin composition including an aqueous epoxy resin emulsion; and
Component B: an aqueous curing system including an epoxy reactive curing agent, a filling slurry, and an additional additive; and
wherein no organic solvent is added during the preparation process of the two-component waterborne wood sealing primer, and the two-component waterborne wood sealing primer has a solid content during application in the range of 45-50wt% and a VOC content of 80 g/L or less.

In the embodiments according to the present application, the aqueous epoxy resin emulsion has an epoxy equivalent in the range of 150-2000 g/eq.

According to another aspect of the present application, a wood article is provided, including:
a wood substrate having at least one major surface; and
a sealing primer layer directly applied on the major surface and formed from the two-component waterborne wood sealing primer according to the present application.

The inventor of the present application has developed a new two-component waterborne wood sealing primer with high solid content during application and low VOC by adjusting and designing various components of the two-component waterborne wood sealing primer. The inventor also surprisingly found that in addition to excellent sealing effect, the two-component waterborne wood sealing primer according to the present application has the advantages of simple preparation process, good storage stability, good workability, and excellent filling and anti-collapse properties.

Without wishing to be bound by any theory, it is speculated that the two-component waterborne wood sealing primer of the present application can achieve the above-mentioned effects for the following reasons: Component A of the two-component waterborne wood sealing primer of the present application includes an aqueous epoxy resin emulsion, in which no fillers are added, nor any additives containing organic solvents is added; epoxy reactive curing agent and specific filling slurry are used in Component B, and the overall formulation does not need to add organic solvents to reduce the viscosity of the film-forming material, so as to achieve low organic solvent content and low VOC emissions, and the epoxy resin does not need to be emulsified to be hydrophilic. In addition, the filling slurry in Component B is separately prepared under high-speed stirring, making the final system more stable, which has better storage stability.

The inventor of the present application also surprisingly found that the two-component waterborne wood sealing primer of the present application only needs to be diluted with a small amount of water during application, and even without water for dilution, that is to say, it has good application performance, which was unforeseen before the present application.

As far as the inventor knows, although waterborne epoxy paint has existed for many years, it can meet the needs of wood coating. At the same time, products with a VOC content of less than 80 g/L have not been reported. The two-component waterborne epoxy paint for wood currently on the market has a relatively high VOC, which does not meet the environmental protection requirements. The two-component waterborne epoxy wood sealing primer of the present application has high solid content during application and low VOC content, meets the requirements of China Environmental Labeling product certification, has good storage stability, does not settle, has good sealing properties, excellent filling properties and anti-collapse performance, which can effectively solve the problems of wood coating bleeding, oil leakage and paint film collapse, and improve the wood coating effect.

The details of one or more embodiments of the disclosure are set forth in the following description. Other features, objects, and advantages of the disclosure will be apparent from the description and from the claims.

### Selected Definitions

As used herein, "a", "an", "the", "at least one", and "one or more" are used interchangeably, unless indicated otherwise. Thus, for example, a coating composition that comprises "an" additive can be interpreted to mean that the coating composition includes "one or more" additives.

Throughout the present disclosure, where compositions are described as having, including, or comprising specific components or fractions, or where processes are described as having, including, or comprising specific process steps, it is contemplated that the compositions or processes as disclosed herein may further comprise other components or fractions or steps, whether or not specifically mentioned in this disclosure, as long as such components or steps do not affect the basic and novel characteristics of the invention, but it is also contemplated that the compositions or processes may consist essentially of, or consist of, the recited components or steps.

In the context of the present application, the term "epoxy equivalent" refers to the mass of epoxy resin containing 1 mol of epoxy groups. Generally, the lower the epoxy equivalent is, the more epoxy groups contained in the epoxy resin, and the higher the reactivity will be. In the embodiments of the present application, the epoxy equivalent of the epoxy resin is usually provided by the supplier.

In the context of the present application, "no organic solvent is added during the preparation process of the two-component waterborne wood sealing primer" means that the raw materials for preparing the two-component waterborne epoxy wood sealing primer of the present application do not contain organic solvent components that have a solubilizing effect. Examples of the "organic solvent components that have a solubilizing effect" include, but are not limited to, cosolvents and coalescing agents with organic solvents as main components. The additives with specific functions such as "defoamer", "dispersant", "wetting agent", "leveling agent", "anti-settling agent" and the like mentioned in the present application do not belong to the group of "organic solvent components that have a solubilizing effect", although these additives with specific effects may contain a small amount of organic solvents. In some embodiments of the present application, the prepared two-component waterborne epoxy wood sealing primer contains less than 8 wt%, preferably less than 5 wt% of organic solvent.

When used in "waterborne wood paint", the term "solid content during application" refers to the non-volatile content contained in the paint after being optionally diluted during the application process. Such content is measured after baking in an oven at 150°C for 1 hour.

As used herein, the term "primer" refers to a coating composition that can be applied to a wood substrate and dried, crosslinked, or otherwise hardened to form a non-tacky continuous film having sufficient adhesion to the surface of the substrate.

When used in the present application, the term "volatile organic compound (VOC)" refers to any carbon-containing compound that participates in atmospheric photochemical reactions except for carbon monoxide, carbon dioxide, carbonic acid, metal carbides or carbonates. Generally, volatile organic compounds have a vapor pressure of 0.1 mm Hg or higher. As used herein, "volatile organic compound content (VOC content)" refers to the weight of VOC per volume of coating solids, for example, it is reported as g/liter (g/L).

When appearing in this specification and claims, the terms "comprising" and "including" and variations thereof do not have a restrictive meaning.

The terms "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

### DETAILED DESCRIPTION

The present application provides a two-component waterborne wood sealing primer, comprising:
Component A: a film-forming resin composition comprising an aqueous epoxy resin emulsion; and
Component B: an aqueous curing system comprising an epoxy reactive curing agent, a filling slurry, and an additional additive; and
wherein no organic solvent is added during the preparation process of the two-component waterborne wood sealing primer, and the two-component waterborne wood sealing primer has a solid content during application in the range of 45-50wt% and a VOC content of 80 g/L or less.

### Component A: film-forming resin composition

The term "film-forming resin composition" herein refers to the resin composition constituting the main body of the coating formed by the two-component waterborne wood sealing primer of the present application, and comprises an aqueous epoxy resin emulsion.

According to some embodiments of the present application, the aqueous epoxy resin emulsion comprises an epoxy resin having a specific epoxy equivalent. The term "epoxy resin" refers to a polymer or oligomer containing two or more epoxy groups per molecule. Preferably, each molecule in the epoxy resin may contain up to four epoxy groups. Preferably, each molecule in the epoxy resin may contain two or three epoxy groups. According to some embodiments of the present application, the epoxy resin may have an epoxy equivalent that varies within a wide range, wherein the epoxy equivalent refers to the mass of the epoxy resin containing 1 mol of epoxy groups. In the context of the present application, the aqueous epoxy resin emulsion contains an epoxy resin having an epoxy equivalent in a range of 150-2000 g/eq, preferably in a range of 200-1000 g/eq.

Suitable epoxy resins include, for example, diglycidyl ethers of polyphenols, such as resorcinol diglycidyl ether, catechol diglycidyl ether, hydroquinone diglycidyl ether, diglycidyl ether of bisphenol A, diglycidyl ether of bisphenol F, diglycidyl ether of bisphenol S, diglycidyl ether of tetramethyl bisphenol; diglycidyl ether of polyhydric alcohols, such as diglycidyl ether of aliphatic glycol, diglycidyl ether of polyether glycols, such as diglycidyl ethers of C₂₋₂₄ alkylene glycols, diglycidyl ethers of poly(ethylene oxide) glycols or diglycidyl ethers of poly(propylene oxide) glycols; polyglycidyl ethers of phenolic resins, such as polyglycidyl ethers of phenol-formaldehyde resins, polyglycidyl ethers of alkyl-substituted phenol-formaldehyde resins, polyglycidyl ethers of phenolhydroxybenzaldehyde resins, or polyglycidyl ether of cresol-hydroxybenzaldehyde resin; or a combination thereof.

According to certain embodiments of the present application, the epoxy resin is a diglycidyl ether of polyphenol, and particularly preferably has the following structural formula (I): 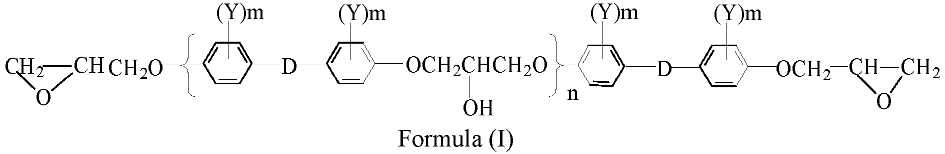
wherein, D represents -S-, -SS-, -SO-, -SO2-, -CO2-, -CO-, -O- or a divalent alkyl group having 1 to 10 carbon atoms, preferably 1 to 5 carbon atoms, more preferably 1 to 3 carbon atoms, such as -CH₂- or -C(CH₃)₂-;
each Y is independently halogen, such as F, Cl, Br, or I, or an optionally substituted monovalent C₁-C₁₀ hydrocarbon group, such as optionally substituted methyl, ethyl, vinyl, propyl, allyl or butyl;
each m is independently 0, 1, 2, 3, or 4; and
n is an integer from 0 to 4, such as 0, 1, 2, 3, or 4.

More preferably, the epoxy resin is a bisphenol A-type epoxy resin, a bisphenol S-type epoxy resin or a bisphenol F-type epoxy resin having the structural formula (I), wherein D represents -C(CH₃)₂- , -SO2- or -CH2-, m represents 0, and n is an integer from 0 to 4.
Most preferably, the epoxy resin is a bisphenol A-type epoxy resin having the structural formula (I), wherein D each represents -C(CH₃)₂-, m represents 0, and n is an integer from 0 to 4.

The epoxy resin disclosed above can be made, for example, by using epichlorohydrin technology well known to those skilled in the art. Alternatively, as an example of the epoxy resin, any suitable commercially available product can be used, such as E55, E51, E44, E20 available from Shanghai Kaiping Resin Co., Ltd.

Epoxy resins are used to provide resin components for aqueous epoxy resin emulsions. On the one hand, this resin component acts as an adhesive to provide adhesion between the coating and the substrate, and to keep the various components (such as fillers) in the epoxy resin component together and impart a certain cohesive strength to the paint film. On the other hand, such resin component has good reactivity with the curing agent, thereby obtaining a coating with high mechanical strength.

As an example of the aqueous epoxy resin emulsion, any suitable commercially available product can be used, such as Allnex 387 from Allnex, 3907 from Huntsman, 900 and 1600 from Nanya, and 484R from Aditya Birla Chemical. Preferably, the aqueous epoxy resin emulsion has a solid content of 45-65% by weight.

According to an embodiment of the present application, relative to the total weight of the film-forming resin composition, the film-forming resin composition contains 100% of the aqueous epoxy resin emulsion. In other words, the film-forming resin composition consists of an aqueous epoxy resin emulsion.

### Component B: an aqueous curing system

In some embodiments of the present application, the aqueous curing system comprises, relative to the total weight of the aqueous curing system,
70-82 wt% of the epoxy reactive curing agent;
18-30 wt% of the filling slurry; and
0-10 wt% of the additional additive comprising one or two of a wetting agent and a leveling agent.

In some embodiments of the present application, the filling slurry comprises water, a defoamer, a dispersant and a filler.

The filling slurry according to the present application may optionally comprise a defoamer to reduce foam in the system. Suitable defoamers include one or more of organosiloxane defoamers, grease defoamers, polyether defoamers and polyether modified silicone defoamers. All types of defoamers are commercially available products. As examples of defoamers, BYK024 available from BYK, TEGO-902W or TEGO-810 available from Tego, Germany can be used.

The filling slurry according to the present application may optionally comprise a dispersant to improve the dispersibility of the waterborne wood sealing primer. As an example of the dispersant, any dispersant suitable for formulating waterborne wood paint can be used, for example, BYK 190 from BYK and TEGO DISPERS 735W from Tego, Germany can be used.

The filling slurry according to the present application may optionally comprise fillers. According to the present application, "filler" refers to any volume extender suitable for a two-component waterborne wood primer, which may be inorganic, for example, in the form of particles. There is no particular limitation on the shape of the particles, and they can have any appropriate shape. The average particle size of the filler can vary within a wide range, for example within a range of about 10 nanometers to about 50 microns. Some fillers, in addition to functioning as volume extenders, also impart one or more desired properties to the composition and/or the coating formed from the composition. For example, some fillers can improve the chemical and/or physical properties, especially the mechanical properties of the coating obtained from the composition. In this case, such filler is also called "reinforcing filler". Suitable fillers may include, for example, zinc stearate, china clay, wollastonite, barite, calcium carbonate, diatomaceous earth, talc, barium sulfate, magnesium aluminum silicate, silicon dioxide, and any combination thereof. Preferably, the filler is one or two of zinc stearate and talc.

In one embodiment of the present application, the filling slurry comprises, relative to the total weight of the filling slurry,
39-44 wt% of water;
0.1-0.5 wt% of the defoamer;
0.5-1 wt% of the dispersant; and
55-60 wt% of the filler.

The filling slurry is prepared separately under high-speed stirring, for example, stirring at a speed of 2000-3000 rpm. Under such high-speed stirring, the uniform dispersion and fineness of each component can be achieved, so that the problem of anti-settling does not need to be considered before mixing with the film-forming resin composition, and the storage stability is better.

The epoxy reactive curing agent comprises an aliphatic polyamine, a fatty amine adduct, an amidoamine, an amino polyamide resin, a cycloaliphatic amine, an aromatic amine, an arylamine, a Mannich base, a ketimine, and a dicyandiamide or combinations thereof.

In some embodiments of the present application, the epoxy reactive curing agent is well-known in the art, for example, it is disclosed in "Coating Technology" edited by Liu Dengliang, fourth edition, 2010, No. 275-280, which is incorporated herein by reference to its entirety.

According to the embodiments of the present application, the weight ratio of the epoxy reactive curing agent to the film-forming resin composition can be adjusted according to actual needs.

In certain embodiments of the present application, the aqueous curing system may further comprises additional additives commonly used in aqueous epoxy resin primers, and these additives will not adversely affect the coating composition or the cured coating obtained therefrom. Suitable additives include, for example, those that can be used to improve the processability or manufacturability of the composition, enhance composition aesthetics, or improve a particular functional property or characteristic of the coating composition or the cured composition resulting therefrom, such as adhesion to a substrate. Suitable examples of the additive include, such as dispersants, leveling agents, bactericides, antifungal agents, chain extenders, lubricants, biocides, plasticizers, defoamers, vehicles, waxes, antioxidants, adhesion promoters, UV stabilizers, or any combination thereof. Each optional ingredient can be included in a sufficient amount to serve its intended purpose, but preferably not in such an amount to adversely affect the coating composition or cured coating obtained therefrom. In a preferred embodiment of the present application, suitable additional additives include dispersants, wetting agents, leveling agents, or any combination thereof.

The dispersant is an agent used to assist the dispersion of the epoxy resin in an aqueous medium. Suitable dispersants may include ionic dispersing agents, non-ionic dispersing agents, or multifunctional dispersing agents. As examples of commercially available dispersing agents, Dispers 715 W, Dispers 740W, Dispers 760W, Disperbyk 194 from Tego, Germany, and BYK 190 from BYK can be used.

The leveling agent is an agent that can promote the film-forming resin composition to form a flat, smooth and uniform coating film during the film-forming process. Suitable leveling agents include polysiloxane leveling agents, polyacrylic leveling agents or any combination thereof. As an example of a commercially available leveling agent, BYK420 available from BYK Company in Germany can be used.

The aqueous curing system according to the present application may optionally include a wetting agent to improve the wettability of the substrate. Suitable wetting agents may include one or more of anionic wetting agents, cationic wetting agents, non-ionic wetting agents, and amphoteric wetting agents. All types of wetting agents are commercially available products, and BYK3455 availabl from BYK and 104-BC availabl from SURFYNOL can be used.

The content of each optional ingredient is sufficient to achieve the intended purpose, but preferably, such content does not adversely affect the aqueous curing system or the cured coating obtained therefrom. According to some embodiments of the present application, the total amount of additional additives is in the range of about 0-10 wt%, preferably in the range of about 0.5-2 wt%, relative to the total weight of the aqueous curing system.

Since no organic solvents such as cosolvents and coalescing agents are used, in some embodiments of the present application, the obtained two-component waterborne wood sealing primer has a VOC content of 80 g/L or lower, preferably a VOC content of 75 g /L or lower, more preferably a VOC content of 70 g/L or lower.

During the formulation of the two-component waterborne wood sealing primer according to the present application, the aqueous curing system containing epoxy reactive curing agent, the filling slurry and additional additives is combined with the film-forming resin composition. A synergistic effect is produced therebetween, so the waterborne wood sealing paint thus obtained has suitable viscosity, higher solid content during application and excellent sealing performance, thus during application the waterborne wood sealing primer of the present application can be used after being diluted by adding 0-10wt% of water relative to the total weight of the waterborne wood sealing primer. Preferably, the waterborne wood sealing paint according to the present application can be used after being diluted by adding 0-5wt% of water relative to the total weight of the waterborne wood sealing paint during application. More preferably, the waterborne wood sealing primer according to the present application can be used without adding water for dilution during application. Therefore, the waterborne wood sealing primer according to the present application has a higher solid content during application. In one embodiment of the present application, the waterborne wood sealing primer has a solid content of 40 wt% or higher, preferably a solid content in the range of 45 wt% to 50 wt%. In this embodiment, the waterborne wood sealing primer has a solid content during application of 40 wt% or higher, preferably a solid content during application in the range of 45 wt% to 50 wt%.

According to some embodiments of the present application, the two-component waterborne wood sealing primer can be prepared by mixing the epoxy reactive curing agent, the additional additives, and the filling slurry to obtain an aqueous curing system, and then the film-forming resin composition and the aqueous curing system are simply mixed in a mixing device at a predetermined weight ratio. The mixed waterborne wood sealing primer can be applied using various methods familiar to those skilled in the art, including spraying (for example, air-assisted, airless or electrostatic spraying), brushing, roller coating, overflow coating, and dipping. In one embodiment of the present application, the mixed wood sealing primer is applied by spraying. Epoxy resin primer can be applied to various wet film thicknesses. In an embodiment of the present application, the wet film thickness preferably provides a dry film thickness of about 45 to about 200 µm, and more preferably about 45 to about 100 µm. The applied coating can be cured by air-drying or by using various drying devices (for example, an oven) familiar to those skilled in the art to accelerate the curing. The preferred heating temperature for curing the epoxy resin primer is from about 25°C to about 80°C, and more preferably from about 25°C to about 55°C, and the preferred heating time is at least three minutes to less than 60 minutes, less than 45 minutes, or less than 40 minutes. The heating time will tend to decrease with the increase of temperature or airflow.

### Wood article

Another aspect of the present application provides a wood article, which comprises: a wood substrate having at least one major surface; and a sealing primer layer formed by the two-component waterborne wood sealing primer according to the present application which is directly coated on the major surface.

As the wood substrate used to manufacture the wood article of the present application, any suitable wood substrate known in the art can be used. In the present application, the term "wood substrate" refers to any cellulose/lignin material derived from the hard, fibrous structural organization of the stems and roots of trees or other woody plants. Wood includes, for example, hardwood and softwood wood cut directly from trees, and engineered wood composite materials made of wood strips, wood chips, wood fibers, or wood veneers. Examples of wood composite materials include, but are not limited to, plywood, oriented strand board (OSB), medium density fiberboard (MDF), particle board, and the like.

The wood article of the present application comprises a wood substrate containing an acidic substance. As an example, the acidic substance includes tannins, aldehydes and/or hemiacetals. In some embodiments of the present application, the wood substrate has a tannin content of at least 0.1% by weight, preferably a tannin content of at least 1% by weight, more preferably a tannin content of at least 5% by weight, and even more preferably a tannin content of at least 10% by weight, even more preferably a tannin content of 30% by weight, as determined by CNS4716-2005. As exemplary wood substrates, hardwood, chestnut, eucalyptus, red chestnut, camellia, eucalyptus, Douglas fir, Japanese cedar, American cypress, Japanese red pine, Japanese cypress, water walnut, black walnut, maple, Japan beech, Japanese paulownia, birch, Borneo, magnolia, ash, teak, Xylosma japonicum, Catalpa wood, Dryobalanops spp., fir, oak and rubber wood.

According to the present application, the wood substrate has at least one, preferably two major surfaces facing each other. As used herein, the "major surface" is the surface for decoration formed by the length and width dimensions of the wood substrate.

According to the present application, the wood article can be prepared, for example, by the following steps: (1) providing a polished wood substrate; (2) using a coating and curing process to sequentially coat the wood substrate and form one or more of two-component waterborne wood sealing primer layers of the present application, to provide the wood substrate with the required sealing performance.

According to the present application, the wood artticles thus obtained can be used in the following applications, including, but not limited to: household furniture, such as tables, chairs, cabinets, etc.; bedroom and bathroom furniture; office furniture; custom furniture, such as school and children's furniture, hospitals furniture, restaurant and hotel furniture, kitchen cabinets and furniture; panels for interior design; indoor and outdoor windows and doors; indoor and outdoor window and door frames; outdoor and indoor wall panels and wooden floors.

The present disclosure is more particularly described in the following examples that are intended as illustrations only, since numerous modifications and variations within the scope of the present disclosure will be apparent to those skilled in the art. Unless otherwise noted, all parts, percentages, and ratios reported in the following examples are on a weight basis, and all reagents used in the examples are commercially available and used directly without further treatment.

### EXAMPLES

### Testing Methods

Viscosity during application: as required, a certain amount of water was used to dilute the sample to be tested, and then an Iwata 2# cup was used to test its viscosity.

Solid content: The amount of remaining components after the sample was baked in an atmospheric oven at 150°C for 1 hour was measured to determine the solid content.

Solid content during application: a certain amount of water was used to dilute the sample to be tested, and then the sample to be tested was measured according to the test method used to test the solid content.

VOC content was measured according to the standard HJ2537-2014.

Storage stability was measured according to the standard GB/T23999-2009.

Sandability was measured according to the standard GB/T23999-2009.

Application performance: manual judgments was made based on whether the gun was blocked during spraying, atomization effect, wetting effect and leveling after spraying.

Sealing property: a "hot steaming method" was used to apply the sealing primer on the wood substrate, to apply a white topcoat on top of the sealing primer layer, and then the sample was put in hot steam for 48 hours to observe whether the topcoat was colored, i.e. whether the color and oil quality of the wood substrate had penetrated the sealing primer layer or not.

Preparation of two-component waterborne wood sealing primer

First, according to the amounts shown in Table 1, the defoamer, dispersant, filler and water were pre-mixed, then grinded and dispersed with a grinder at high speed (about 2400-2800 rpm) to obtain a uniform system to prepare a filling slurry.

**Table 1**

| **Raw materials** | **Weight percentage (wt%)** |
|---|---|
| Water | 40 |
| Defoamer | 0.3 |
| Dispersant | 0.7 |
| Filler (tal, zinc stearate) | 59 |

Then, according to the amounts shown in Table 2, the system was mixed with a commercially available epoxy-reactive curing agent and additional additives to obtain an aqueous curing system as Component B. Then a commercially available 100% aqueous epoxy resin emulsion was used as Component A. Then, the obtained Component A and Component B were mixed to form the two-component waterborne wood sealing primer of Example 1-2. The comparative example did not contain any filling slurry, and was prepared according to the components shown in Table 2.

**Table 2**

| | **Raw materials** | **Example 1 (wt%)** | **Example 2 (wt%)** | **Comparative Example (wt%)** |
|---|---|---|---|---|
| | Aqueous epoxy resin emulsion | 100 | 100 | 80 |
| | Defoamer | / | / | 0.3 |
| | Dispersant | / | / | 0.8 |
| | Filler (talc, zinc stearate) | / | / | 10 |
| Component A | Additional additives (wetting agent, leveling agent, anti-settling agent, etc.) | / | / | 5.7 |
| | Cosolvent (propylene Glycol Methyl Ether) | / | / | 1 |
| | Coalescing agent (diethylene glycol monobutyl ether) | / | / | 1 |
| | Rheological additives (PUR 40, MÜNZING, Germany) | / | / | 0.2 |
| | Water | / | / | 1 |
| Component B | Epoxy reactive curing agent | 75 | 80 | 100 |
| | Filling slurry | 23.1 | 18.1 | / |
| | Wetting agent | 0.9 | 0.9 | / |
| | Water | 1 | 1 | / |
| Weight ratio of Component A to Component B | | 100:55 | 100:52 | 100:33 |
| Performance | Solid content during application | 49% | 48% | 47% |
| | Viscosity during application | 55s | 55s | 55s |
| | VOC content (g/L) | 73 | 75.2 | 109 |
| | Storage stability | 5 | 5 | 3 |
| | Activation period | 3 h | 3 h | 2 h |
| | Sandability | 4 | 3 | 4 |
| | Application performance | 5 | 5 | 3 |
| | Sealing property | 5 | 5 | 5 |

Then, the performance of the two-component waterborne wood sealing primers of Examples 1-2 and Comparative Examples was tested, including solid content during application, viscosity during application, VOC content, storage stability, pot life, sandability, application performance and sealing property, The results are shown in Table 2. Among them, storage stability, sandability, application performance and sealing property were evaluated on a scale of 1-5, with 1 being the worst and 5 being the best.

It can be seen from the results in Table 2 that the aqueous curing system containing epoxy reactive curing agent, filling slurry and additional additives was combined with the film-forming resin composition, and they undergone a chemical crosslinking reaction to form a dense paint film having high mechanical properties, the resulting sealed primer coating had good sealing properties, efficient filling effect and good anti-collapse properties; at the same time, the addition of a filling slurry into the curing agent solved the problem of storage stability (it was easy to stratify in the emulsion to form a hard precipitate), and simplified the production process, reduced the production cost, and shortened the production cycle. In addition, since the system according to the present application did not use any organic solvents such as cosolvents and coalescing agents, the obtained two-component waterborne wood sealing primer had a VOC content of 80g/L or lower.

## Claims

1. A two-component waterborne wood sealing primer, comprising:
Component A: a film-forming resin composition comprising an aqueous epoxy resin emulsion; and
Component B: an aqueous curing system comprising an epoxy reactive curing agent, a filling slurry, and an additional additive; and
wherein no organic solvent is added during the preparation process of the two-component waterborne wood sealing primer, and the two-component waterborne wood sealing primer has a solid content during application in the range of 45-50wt% and a VOC content of 80 g/L or less.

2. The two-component waterborne wood sealing primer according to claim 1, wherein the aqueous epoxy resin emulsion has an epoxy equivalent in a range of 150-2000 g/eq.

3. The two-component waterborne wood sealing primer according to claim 1, wherein the film-forming resin composition comprises 100wt% of aqueous epoxy resin emulsion relative to the total weight of the film-forming resin composition.

4. The two-component waterborne wood sealing primer according to any one of claims 1-3, wherein the two-component waterborne wood sealing primer has a VOC content of 75 g/L or less.

5. The two-component waterborne wood sealing primer according to any one of claims 1-3, wherein the aqueous curing system comprises, relative to the total weight of the aqueous curing system,
70-82 wt% of the epoxy reactive curing agent;
18-30 wt% of the filling slurry comprising water, a defoamer, a dispersant, and a filler; and
0-10 wt% of the additional additive comprising one or two of a wetting agent and a leveling agent.

6. The two-component waterborne wood sealing primer according to claim 5, wherein the filler is one or two of zinc stearate and talc.

7. The two-component waterborne wood sealing primer according to claim 5, wherein the filling slurry comprises, relative to the total weight of the filling slurry,
39-44 wt% of water;
0.1-0.5 wt% of the defoamer;
0.5-1 wt% of the dispersant; and
55-60 wt% of the filler.

8. The two-component waterborne wood sealing primer according to any one of claims 1-3, wherein the epoxy reactive curing agent comprises an aliphatic polyamine, a fatty amine adduct, an amidoamine, an amino polyamide resin, a cycloaliphatic amine, an aromatic amine, an arylamine, a Mannich base, a ketimine, and a dicyandiamide or combinations thereof.

9. A wood article comprising:
a wood substrate having at least one major surface; and
a sealing primer layer formed from the two-component waterborne wood sealing primer of any one of claims 1 to 8 which is directly applied on the major surface.

10. The wood product according to claim 9, wherein the wood substrate is selected from one or more of hardwood, chestnut, eucalyptus, red chestnut, camellia, eucalyptus, Douglas fir, Japanese cedar, American cypress, Japanese red pine, Japanese cypress, water walnut, black walnut, maple, Japan beech, Japanese paulownia, birch, Borneo, magnolia, ash, teak, Xylosma japonicum, Catalpa wood, Dryobalanops spp., fir, oak and rubber wood.

## Patentansprüche

1. Wasserbasierte Zweikomponenten-Holzversiegelungsgrundierung, umfassend:
Komponente A: eine filmbildende Harzzusammensetzung, umfassend eine wässrige Epoxidharzemulsion; und
Komponente B: ein wässriges Härtungssystem, umfassend einen reaktiven Epoxidhärter, eine Füllschlämme und ein zusätzliches Additiv; und
wobei kein organisches Lösungsmittel während des Herstellungsprozesses der wasserbasierten Zweikomponenten-Holzversiegelungsgrundierung hinzugefügt wird und die wasserbasierte Zweikomponenten-Holzversiegelungsgrundierung einen Feststoffgehalt während der Anwendung in dem Bereich von 45-50 Gew.-% und einen VOC-Gehalt von 80 g/l oder weniger aufweist.

2. Wasserbasierte Zweikomponenten-Holzversiegelungsgrundierung nach Anspruch 1, wobei die wässrige Epoxidharzemulsion ein Epoxidäquivalent in einem Bereich von 150-2000 g/Äq aufweist.

3. Wasserbasierte Zweikomponenten-Holzversiegelungsgrundierung nach Anspruch 1, wobei die filmbildende Harzzusammensetzung zu 100 Gew.-% wässrige Epoxidharzemulsion, bezogen auf das Gesamtgewicht der filmbildenden Harzzusammensetzung, umfasst.

4. Wasserbasierte Zweikomponenten-Holzversiegelungsgrundierung nach einem der Ansprüche 1 bis 3, wobei die wasserbasierte Zweikomponenten-Holzversiegelungsgrundierung einen VOC-Gehalt von 75 g/l oder weniger aufweist.

5. Wasserbasierte Zweikomponenten-Holzversiegelungsgrundierung nach einem der Ansprüche 1 bis 3, wobei das wässrige Härtungssystem, bezogen auf das Gesamtgewicht des wässrigen Härtungssystems, umfasst:
zu 70-82 Gew.-% den reaktiven Epoxidhärter;
zu 18-30 Gew.-% der Füllaufschlämmung, umfassend Wasser, einen Entschäumer, ein Dispergiermittel und einen Füllstoff; und
zu 0-10 Gew.-% des zusätzlichen Additivs, umfassend ein oder zwei Netzmitteln und ein Verlaufsmittel.

6. Wasserbasierte Zweikomponenten-Holzversiegelungsgrundierung nach Anspruch 5, wobei der Füllstoff einer oder zwei von Zinkstearat und Talk ist.

7. Wasserbasierte Zweikomponenten-Holzversiegelungsgrundierung nach Anspruch 5, wobei die Füllschlämme, bezogen auf das Gesamtgewicht der Füllschlämme, umfasst:
zu 39-44 Gew.-% Wasser;
zu 0,1-0,5 Gew.-% den Entschäumer;
zu 0,5-1 Gew.-% das Dispergiermittel, und
zu 55-60 Gew.-% den Füllstoff;

8. Wasserbasierte Zweikomponenten-Holzversiegelungsgrundierung nach einem der Ansprüche 1 bis 3, wobei der reaktive Epoxidhärter ein aliphatisches Polyamin, ein Fettaminaddukt, ein Amidoamin, ein Aminopolyamidharz, ein cycloaliphatisches Amin, ein aromatisches Amin, ein Arylamin, eine Mannich-Base, ein Ketimin und ein Dicyandiamid oder Kombinationen davon umfasst.

9. Holzerzeugnis, umfassend:
ein Holzsubstrat, das mindestens eine Hauptoberfläche aufweist; und
eine Versiegelungsgrundierungsschicht aus der wasserbasierten Zweikomponenten-Holzversiegelungsgrundierung nach einem der Ansprüche 1 bis 8, die direkt auf die Hauptfläche aufgetragen wird.

10. Holzerzeugnis nach Anspruch 9, wobei das Holzsubstrat aus einem oder mehreren von Hartholz, Kastanie, Eukalyptus, Rotkastanie, Kamelie, Eukalyptus, Douglasie, japanische Zeder, amerikanische Zypresse, japanische Rotkiefer, japanische Zypresse, Wassernuss, Schwarznuss, Ahorn, Japanbuche, japanische Paulownie, Birke, Borneo, Magnolie, Esche, Teak, Xylosma japonicum, Catalpa-Holz, Dryobalanops spp, Tanne, Eiche und Kautschukholz ausgewählt ist.

## Revendications

1. Apprêt de scellement de bois à deux composants à base d'eau, comprenant :
Composant A : une composition de résine filmogène comprenant une émulsion aqueuse de résine époxy ; et
Composant B : un système de durcissement aqueux comprenant un agent de durcissement réactif époxy, une suspension de remplissage et un additif supplémentaire ; et
dans lequel aucun solvant organique n'est ajouté pendant le processus de préparation de l'apprêt de scellement de bois à deux composants à base d'eau, et l'apprêt de scellement de bois à deux composants à base d'eau a une teneur en solides pendant l'application de l'ordre de 45 à 50 % en poids et une teneur en COV de 80 g/L ou moins.

2. Apprêt de scellement de bois à deux composants à base d'eau selon la revendication 1, dans lequel l'émulsion aqueuse de résine époxy a un équivalent époxy compris entre 150 et 2000 g/eq.

3. Apprêt de scellement de bois à deux composants à base d'eau selon la revendication 1, dans lequel la composition de résine filmogène comprend 100 % en poids d'émulsion aqueuse de résine époxy par rapport au poids total de la composition de résine filmogène.

4. Apprêt de scellement de bois à deux composants à base d'eau selon l'une quelconque des revendications 1 à 3, dans lequel l'apprêt de scellement de bois à deux composants à base d'eau a une teneur en COV de 75 g/L ou moins.

5. Apprêt de scellement de bois à deux composants à base d'eau selon l'une quelconque des revendications 1 à 3, dans lequel le système de durcissement aqueux comprend, par rapport au poids total du système de durcissement aqueux,
de 70 à 82 % en poids de l'agent de durcissement réactif d'époxy ;
de 18 à 30 % en poids de la boue de remplissage comprenant de l'eau, un antimousse, un dispersant et une charge ; et
de 0 à 10 % en poids de l'additif supplémentaire comprenant un ou deux agents mouillants et un agent de nivellement.

6. Apprêt de scellement de bois à deux composants à base d'eau selon la revendication 5, dans lequel la charge est un ou deux stéarates de zinc et du talc.

7. Apprêt de scellement de bois à deux composants à base d'eau selon la revendication 5, dans lequel la suspension de remplissage comprend, par rapport au poids total de la suspension de remplissage,
de 39 à 44 % en poids d'eau ;
de 0,1 à 0,5 % en poids de l'agent anti-mousse ;
de 0,5 à 1 % en poids de l'agent de dispersion ; et
de 55 à 60 % en poids de la charge.

8. Apprêt de scellement de bois à deux composants à base d'eau selon l'une quelconque des revendications 1 à 3, dans lequel l'agent de durcissement réactif époxy comprend une polyamine aliphatique, un adduit d'amine grasse, une amidoamine, une résine polyamide aminée, une amine cycloaliphatique, une amine aromatique, une arylamine, une base de Mannich, une kétimine et un dicyandiamide, ou des combinaisons de ceux-ci.

9. Article en bois comprenant :
un substrat en bois ayant au moins une surface principale ; et
une couche d'apprêt de scellement formée à partir de l'apprêt de scellement de bois à deux composants à base d'eau de l'une quelconque des revendications 1 à 8, qui est directement appliquée sur la surface principale.

10. Produit en bois selon la revendication 9, dans lequel le substrat en bois est choisi parmi un ou plusieurs parmi du bois dur, de châtaignier, eucalyptus, châtaignier rouge, camélia, eucalyptus, sapin de Douglas, cèdre du Japon, cyprès américain, pin rouge du Japon, cyprès du Japon, noyer d'eau, noyer noir, érable, hêtre du Japon, paulownia du Japon, bouleau, arbre de Bornéo, magnolia, frêne, teck, Xylosma du Japon, bois de Catalpa, espèces des Dryobalanops, sapin, chêne et bois d'hévéa.
